# EUROPÄISCHE PATENTSCHRIFT

(11) **EP 0 617 063 B1**
(45) Veröffentlichungstag und Bekanntmachung des Hinweises auf die Patenterteilung: **08.09.1999**
(21) Anmeldenummer: 94103493.6
(22) Anmeldetag: 08.03.1994
(51) Int. Cl.: C08F 255/02, C08F 255/00, C08F 8/46

(54) **Mit radikalisch zerfallenden Initiatoren gepfropfte Propylencopolymerisate**
Propylene copolymers grafted using free radical initiators
Copolymères de propylène greffés à l'aide d'initiateurs radicalaires

(30) Priorität: 18.03.1993 DE 4308587; 18.03.1993 DE 4308590; 18.03.1993 DE 4308588
(43) Veröffentlichungstag der Anmeldung: 28.09.1994
(73) Patentinhaber: BASF Aktiengesellschaft, 67063 Ludwigshafen (DE)
(72) Erfinder: Marczinke, Bernd Lothar, Dr., D-67346 Speyer (DE); Kerth, Juergen, Dr., D-67316 Carlsberg (DE); Mueller, Patrik, Dr., D-67661 Kaiserslautern (DE); Baumgartl, Horst, Dr., D-55122 Mainz (DE); Ittemann, Peter, Dr., D-68623 Lampertheim (DE)

(56) Entgegenhaltungen:
- EP-A- 0 082 704
- EP-A- 0 476 178
- FR-A- 2 291 992
- CHEMICAL ABSTRACTS, vol. 99, no. 22, 28. November 1983, Columbus, Ohio, US; abstract no. 177135t, Seite 60 ;

## Beschreibung

Die vorliegende Erfindung betrifft mit α,β-ethylenisch ungesättigten Carbonsäuren bzw. Carbonsäurederivaten gepfropfte Propylencopolymerisate, bestehend aus
einem Propylencopolymerisat aus einem statistisch verteilten Propylencopolymerisat (I) mit 0,1 bis weniger als 15 Gew.-% einpolymerisierter C₂- bis C₁₀-Alk-1-ene und einem statistisch verteilten Propylencopolymerisat (II) mit 15 bis 80 Gew.-% einpolymerisierter C₂- bis C₁₀-Alk-1-ene
erhältlich durch Umsetzung des zu pfropfenden Monomeren mit dem Propylencopolymerisat bei Drücken von 1 bis 300 bar, wobei man in Anwesenheit von 0,005 bis 0,5 Gew.-% eines radikalisch zerfallenden Initiators, 0,01 bis 1,0 Gew.-% des zu pfropfenden Monomeren, wobei sich beide Konzentrationsangaben jeweils auf das Propylencopolymerisat beziehen, dem aufgeschmolzenen Propylencopolymerisat hinzumischt und die Pfropfreaktion bei 200 bis 350°C durchführt.

Weiterhin betrifft die vorliegende Erfindung ein Verfahren zur Herstellung dieser gepfropften Propylencopolymerisate sowie ein Verfahren zur Herstellung von vernetzten oder vernetzbaren Propylencopolymerisaten, ferner die Verwendung der gepfropften Propylencopolymerisate als Haftvermittler oder in Folien, Fasern oder Formkörper.

Pfropfcopolymere können dadurch hergestellt werden, daß man das zu pfropfende Polymerisat zunächst mit Peroxiden umsetzt und anschließend mit geeigneten Monomeren in Kontakt bringt (US-A 3 862 265, US-A 3 953 655, US 4 001 172). Durch die Behandlung mit den als Initiatoren wirkenden Peroxiden bilden sich zunächst Radikale an der Polymerkette, an die sich in der darauf folgenden Pfropfreaktion Monomere anlagern können.

Weiterhin sind Verfahren bekannt, in welchen Homo- oder Copolymerisate des Ethylens zunächst durch eine von organischen Peroxiden initiierte Reaktion mit ungesättigten Carbonsäuren und/oder deren Estern bzw. Anhydriden gepfropft und anschließend mit multifunktionellen Aminen oder Alkoholen umgesetzt werden (DE-A 2 627 785, EP-A 50 994, US-A 4 089 794, US-A 4 137 185, US-A 4 161 452, US-A 4 382 128). Dabei entstehen in der Regel vernetzte Produkte, die zwar sehr stabil sind, sich aber aufgrund ihres geringen Schmelzflusses thermisch nicht mehr mit den in der Kunststofftechnik üblichen Methoden verarbeiten lassen.

Des weiteren sind Verfahren zur Herstellung von gepfropften oder vernetzten Polypropylenen beschrieben, die aber teilweise erhebliche Mängel aufweisen. So führt beispielsweise der Einsatz von Peroxiden bei Pfropfungs- oder Vernetzungsreaktionen in der Regel zu einem Molmassenabbau, der die mechanischen Eigenschaften des dabei erhältlichen Produktes deutlich verschlechtert [J. Appl. Poly. Sci., Vol. 32, 5431-5437 (1986)]. Eine andere Möglichkeit der Vernetzung von Polypropylenen besteht darin, diese mit Vinylsilanen zunächst zu pfropfen und anschließend unter Verwendung eines organischen Zinnkatalysators durch Kondensation mit Wasserdampf zu vernetzen (DE-A 3 520 106, US-A 3 328 339). Dieses Verfahren ist aber sehr aufwendig, da die meist toxischen Zinnkatalysatoren nur schwierig aus dem Produkt entfernt werden können. Außerdem werden dabei sämtliche, für die Haftung der Polymerschmelze auf polaren Substraten erforderlichen Silangruppen beim Abkühlen durch Wasser hydrolysiert, was zur Folge hat, daß Mehrschichtenverbunde praktisch nicht mehr hergestellt werden können. Aus der FR 2 572 417 ist ferner ein Verfahren bekannt, bei welchem Polypropylen durch Reaktion mit organischen Peroxiden und ungesättigten Carbonsäureanhydriden gepfropft werden kann.

Der Verwendung von radikalisch zerfallenden Initiatoren, beispielsweise Peroxiden, in Pfropfreaktionen stehen seitens des Standes der Technik gewisse Bedenken entgegen. So ist beispielsweise bekannt, daß der Einsatz von hohen Peroxidkonzentrationen bei der Pfropfung von Polypropylenen in der Regel zu einem starken Molmassenabbau und zu einer Verringerung der Haftfähigkeit gegenüber polaren Substanzen, zum Beispiel Metallen oder Polyamiden führt, so daß das entstehende Polymerisat keine befriedigenden anwendungstechnischen Eigenschaften aufweist.

Aus der DE-A 4 022 570 ist bekannt, gepfropfte Propylencopolymerisate in Abwesenheit radikalisch zerfallender Initiatoren herzustellen. Nach diesem leicht durchführbaren Verfahren werden Pfropfcopolymerisate mit guten mechanischen Eigenschaften erhalten, die gegebenenfalls noch mit Vernetzungsmitteln zu vernetzten oder vernetzbaren Materialien umgesetzt werden können.

Nachteilig an dem in der DE-A 40 22 570 beschriebenen Verfahren ist jedoch, daß die daraus erhaltenen Propylencopolymerisate häufig keine sehr hohen Pfropfausbeuten aufweisen, was für einige Anwendungsbereiche wichtig ist. Unter Pfropfausbeute versteht man dabei den prozentualen Anteil der gepfropften Monomeren, bezogen auf die Gesamtmenge des eingesetzten, zu pfropfenden Monomeren. Aus den nicht sehr hohen Pfropfausbeuten resultieren Haftfestigkeiten und Zugfestigkeiten gegenüber Materialien wie beispielsweise Glas, Polyamid oder Metallen, die für einige Anwendungsbereiche noch verbesserungsfähig sind.

Der vorliegenden Erfindung lag daher die Aufgabe zugrunde, den geschilderten Nachteilen abzuhelfen und gepfropfte Propylencopolymerisate zu entwickeln, die sich durch eine erhöhte Pfropfausbeute und eine verbesserte Zugfestigkeit auszeichnen.

Demgemäß wurden die eingangs definierten, mit ethylenisch ungesättigten Carbonsäuren- bzw. Carbonsäurederivaten gepfropften Propylencopolymerisate gefunden.

Bei dem, zu den erfindungsgemäßen Propylencopolymerisaten führenden Verfahren werden als Pfropfmonomere α,β-ungesättigte Carbonsäuren bzw. Carbonsäurederivate verwendet. Unter α,β-ungesättigten Carbonsäuren bzw. Carbonsäurederivaten sollen dabei die üblichen mit Propylen copolymerisierbaren Carbonsäuren, sowie deren Ester-, Anhydrid- oder Amidderivate verstanden werden. Bevorzugt werden u.a. Maleinsäure, Fumarsäure, Itaconsäure, Acrylsäure, Crotonsäure oder deren Anhydride eingesetzt, wobei Maleinsäureanhydrid besonders geeignet ist.

Das zu pfropfende Monomer wird bei dem zu den erfindungsgemäßen Propylencopolymerisaten führenden Verfahren mit einem solchen Propylencopolymerisat umgesetzt, welches aus
einem Propylencopolymerisat aus
einem statistisch verteilten Propylencopolymerisat (I) mit 0,1 bis weniger als 15 Gew.-% einpolymerisierter C₂- bis C₁₀-Alk-1-ene und
einem statistisch verteilten Propylencopolymerisat (II) mit 15 bis 80 Gew.-% einpolymerisierter C₂- bis C₁₀-Alk-1-ene

Bevorzugt wird dabei ein solches Propylencopolymerisat verwendet, welches ein statistisch verteiltes Propylencopolymerisat (I) mit 0,2 bis 12 Gew.-%, insbesondere mit 0,3 bis 9 Gew.-% einpolymerisierter C₂- bis C₁₀-Alk-1-ene, sowie ein statistisch verteiltes Propylencopolymerisat (II) 20 bis 75 Gew.-% und insbesondere 25 bis 70 Gew.-% einpolymerisierter C₂- bis C₁₀-Alk-1-ene aufweist. Als C₂- bis C₁₀-Alk-1-ene werden dabei insbesondere Ethylen, But-1-en, Pent-1-en, Hex-1-en, Hept-1-en oder Oct-1-en verwendet, wobei bei der Herstellung dieser Copolymerisate die C₂- bis C₁₀-Alk-1-ene sowohl einzeln als auch als Gemische zusammen mit dem Propylen copolymerisiert werden können.

Vorzugsweise wird ein solches Propylencopolymerisat (A₂) verwendet, welches aus 25 bis 97 Gew.-% des statistisch verteilten Propylencopolymerisats (I) und aus 3 bis 75 Gew.-% des statistisch verteilten Propylencopolymerisats (II) besteht. Besonders bevorzugte Propylencopolymerisate(A₂) weisen dabei mengenmäßige Anteile am statistisch verteilten Propylencopolymerisat (I) von 35 bis 95 Gew.-% und insbesondere von 40 bis 93 Gew.-% und am statistisch verteilten Propylencopolymerisat (II) von 5 bis 65 Gew.-% und insbesondere von 7 bis 60 Gew.-% auf.

Die Herstellung dieser Propylencopolymerisate erfolgt üblicherweise durch Polymerisation mit Hilfe von Ziegler-Natta-Katalysatoren. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt. Die Polymerisation erfolgt dabei in den, in der Technik üblicherweise für Polymerisationsreaktionen verwendeten Reaktoren, vorzugsweise in der Gasphase.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 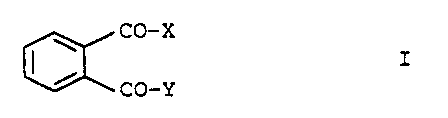 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyerbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

R¹ₙSi(OR²)₄₋ₙ II.

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethorydiisopropylsilan, Dimethoryisobutylisopropylsilan, Dimethoxydiisobutylsilan, Dimethorydicyclopentylsilan, Diethoxyisobutylisopropylsilan und Dimethoxyisopropylsek.butylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Mit Hilfe derartiger Katalysatorsysteme lassen sich die zur Darstellung der erfindungsgemäßen, gepfropften Polymerisate benötigten Propylencopolymerisate herstellen.

Die Propylencopolymerisate sind u.a. dadurch erhältlich, daß zunächst in einer ersten Polymerisationsstufe das statistisch verteilte Propylencopolymerisat (I) hergestellt wird und anschließend diesem das statistisch verteilte Propylencopolymerisat (II) hinzugefügt wird. Dies kann z.B. in einer zweistufigen Reaktorkaskade erfolgen. Die Reihenfolge der Herstellung der einzelnen Propylencopolymerisate (I) und (II) kann auch umgekehrt werden.

Dabei wird die Polymerisation in der ersten Polymerisationsstufe vorzugsweise bei einem Druck von 20 bis 40 bar, insbesondere von 25 bis 35 bar, einer Temperatur von 60 bis 90°C, insbesondere von 65 bis 85°C und einer mittleren Verweilzeit des Reaktionsgemisches von 0,5 bis 5 Stunden, insbesondere von 1,0 bis 4 Stunden durchgeführt. Üblicherweise wählt man die Reaktionsbedingungen so, daß in der ersten Polymerisationsstufe pro mmol der Aluminiumkomponente 0,05 bis 2 kg, bevorzugt 0,1 bis 1,5 kg des Propylencopolymerisats (I) gebildet wird. Dabei empfiehlt es sich, das Partialdruckverhältnis zwischen Propylen und dem C₂- bis C₁₀-Alk-1-en auf etwa 5:1 bis 500:1, insbesondere auf 10:1 bis 200:1, einzustellen. Die Polymerisation kann in Anwesenheit von Reglern, beispielsweise von Wasserstoff durchgeführt werden.

Das auf diese Weise erhältliche Propylencopolymerisat (I) wird nach Beendigung der Reaktion zusammen mit dem Katalysator aus der ersten Polymerisationsstufe ausgetragen und in die zweite Polymerisationsstufe eingeführt, wo durch Hinzupolymerisieren eines Gemisches aus Propylen und weiteren C₂- bis C₁₀-Alk-1-enen das Propylencopolymerisat (II) gebildet wird.

In der zweiten Polymerisationsstufe erfolgt die Polymerisation vorzugsweise bei einem Druck von 5 bis 30 bar, insbesondere von 10 bis 25 bar, einer Temperatur von 30 bis 80°C, insbesondere von 40 bis 70°C und einer mittleren Verweilzeit von 0,5 bis 5 Stunden, insbesondere von 1,0 bis 4 Stunden. Das Partialdruckverhältnis zwischen Propylen und dem C₂- bis C₁₀-Alk-1-en liegt in diesem Fall bei etwa 0,1:1 bis 20:1, insbesondere bei 0,15:1 bis 15:1. Das Gewichtsverhältnis zwischen den in der ersten und den in der zweiten Polymerisationsstufe umgesetzten Monomeren beträgt etwa 33:1 bis 1:3, insbesondere 19:1 bis 1:2.

Weiterhin kann es sich empfehlen, dem Reaktionsgemisch der zweiten Polymerisationsstufe ein C₁- bis C₈-Alkanol, insbesondere ein C₁-C₄-Alkanol, hinzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des C₁-C₈-Alkanols wird dabei zweckmäßigerweise so bemessen, daß das Molverhältnis zwischen dem C₁-C₈-Alkanol und der als Cokatalysator dienenden Aluminiumverbindung 0,01:1 bis 10:1, insbesondere 0,02:1 bis 5:1 beträgt.

Das Molekulargewicht der dabei erhältlichen Propylencopolymerisate (II) kann wie üblich durch Zugabe von Reglern, insbesondere von Wasserstoff kontrolliert werden. Weiterhin ist es möglich, Inertgase wie Stickstoff oder Argon mitzuverwenden.

Auf diese Weise erhält man das erfindungsgemäß einzusetzende Propylencopolymerisat bestehend aus dem statistisch verteilten Propylencopolymerisat (I) und dem statistisch verteilten Propylencopolymerisat (II).

Die erfindungsgemäßen, gepfropften Propylencopolymerisate werden vorzugsweise nach einem Verfahren hergestellt, bei welchem man bei Drücken von 1 bis 300 bar, vorzugsweise bei Drücken von 1 bis 250 bar, in Anwesenheit eines radikalisch zerfallenden Initiators 0,01 bis 1,0 Gew.-%, bezogen auf das Propylencopolymerisat, des zu pfropfenden Monomeren, dem aufgeschmolzenen Propylencopolymerisat hinzumischt und die Pfropfreaktion bei Temperaturen von 200 bis 350°C durchführt. Vorzugsweise wird das zu pfropfende Monomere dabei in Konzentrationen von 0,01 bis 0,8, insbesondere von 0,01 bis 0,5 Gew.-%, jeweils bezogen auf das Propylencopolymerisat, eingesetzt. Die Pfropfreaktion läßt sich vorteilhaft bei Temperaturen von 210 bis 290°C, insbesondere bei Temperaturen von 210 bis 280°C und Verweilzeiten von 0,5 bis 10, insbesondere von 0,5 bis 5 Minuten, durchführen.

Die Pfropfreaktion erfolgt in Anwesenheit von 0,005 bis 0,5 Gew.-%, bezogen auf das Propylencopolymerisat eines radikalisch zerfallenden Initiators. Vorzugsweise wird die Pfropfreaktion in Anwesenheit von 0,01 bis 0,2 Gew.-%, insbesondere von 0,01 bis 0,1 Gew.-%, bezogen auf das Propylencopolymerisat, des radikalisch zerfallenden Initiators durchgeführt.

Als radikalisch zerfallende Initiatoren werden dabei üblicherweise organische Azoverbindungen oder organische Peroxide verwendet, wobei letztere bevorzugt eingesetzt werden. Besonders bevorzugte organische Peroxidverbindungen weisen Halbwertszeiten bei einer Temperatur von 210°C von 1 bis 30 Sekunden auf. Innerhalb dieser Verbindungen sind insbesondere Dicumylperoxid, Monocunyl(tert.butyl)-peroxid, Di(tert.butyl)peroxid, 2,5-Dimethyl-2,5-di-(tert.butylperoxy)hexan und 2,5-Dimethyl-2,5-di(tert.-butylperoxy)hexin-3 hervorzuheben.

Bei der Pfropfung der Propylencopolymerisate in Anwesenheit des radikalisch zerfallenden Initiators können die in der Kunststofftechnik üblichen Reaktoren, beispielsweise Extruder oder Brabender-Mischer eingesetzt werden. Besonders gut eignen sich dabei insbesondere Zweischneckenextruder. In einer bevorzugten Ausführungsform dosiert man das Propylencopolymerisat zusammen mit dem zu pfropfenden Monomeren und dem radikalisch zerfallenden Initiator in den Einzug des Zweischneckenextruders, wo das Gemisch zunächst bei Temperaturen von etwa 120 bis 180°C aufgeschmolzen und anschließend bei 200 bis 350°C 0,5 bis 5 Minuten lang gepfropft wird. Bevorzugt wird dabei das zu pfropfende Monomere im flüssigen Zustand hinzugefügt, wobei dieses vorher erwärmt wird. Das zu pfropfende Monomere kann auch nach dem Aufschmelzen des Propylencopolymerisats in den Extruder gegeben werden. Der radikalisch zerfallende Initiator wird üblicherweise entweder als Substanz oder aber als Lösung in einem inerten Kohlenwasserstoff hinzugefügt. Zweckmäßig werden nach Beendigung der Pfropfreaktion in zwei, dem Einzugsbereich des Extruders sich anschließenden Entgasungszonen Spuren der nicht umgesetzten zu pfropfenden Monomere entfernt.

Die auf diese Weise erhältlichen gepfropften Propylencopolymerisate enthalten üblicherweise 0,01 bis 1 Gew.-% des zu pfropfenden Monomeren. Sie weisen gute anwendungstechnische Eigenschaften, insbesondere eine hohe Haft- und Zugfestigkeit gegenüber polaren Substanzen, beispielsweise gegenüber Metallen oder Polyamiden auf. Darüber hinaus zeichnen sie sich durch eine verbesserte Pfropfausbeute aus. Sie sind farb- und geruchlos und weisen nur geringe Restmonomergehalte auf. Ihre Schmelzflußindices liegen im Bereich von 0,1 bis 100 g/10 min., vorzugsweise im Bereich von 1,0 bis 50 g/10 min., jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Die erfindungsgemäßen, gepfropften Propylencopolymerisate eignen sich u.a. als Haftvermittler oder in Folien, Fasern oder Formkörper. Sie können auch mit organischen Vernetzungsmitteln, wie beispielsweise Diaminen zu vernetzten oder vernetzbaren Propylencopolymerisaten umgesetzt werden.

### Beispiele

Die Beispiele 1 und 2 sowie die Vergleichsbeispiele A und B wurden in einem Zweischneckenextruder der Fa. Werner & Pfleiderer ZSK40 durchgeführt. Die dabei verwendeten Propylencopolymerisate wurden als Grieß oder als Granulat dem Zweischneckenextruder zugeführt und dort bei 180°C aufgeschmolzen. Der Polymerdurchsatz im Extruder betrug 20 kg/h, die mittlere Verweilzeit 2 Minuten.

### Beispiel 1

100 Gew.-Teile eines Propylen-Ethylencopolymerisats bestehend aus 55,2 Gew.-% eines statistischen Ethylen-Propylencopolymerisats (bestimmt durch Extraktionsfraktionierung nach W. Holtrup, Makromol. Chem. 178, 2335 (1977)) mit 2,5 Gew.-% einpolymerisiertem Ethylen (bestimmt durch Fouriertransformationsspektroskopie) und 44,8 Gew.-% eines Propylen-Ethylencopolymerisats mit einem Ethylengehalt von 60 Gew.-% und einen Schmelzflußindex von 1,0 g/10 min (bei 230°C und 2,16 kg, nach DIN 53735) wurden im Zweischneckenextruder ZSK 40 zusammen mit 0,02 Gew.-Teilen 2,5-Dimethyl-2,5-di-tert.-butyl(peroxyhexan) bei 180°C aufgeschmolzen, mit 0,25 Gew.-Teilen flüssigem Maleinsäureanhydrid versetzt und bei 260°C zur Reaktion gebracht. Der Druck betrug dabei 12 bar. Nach Beendigung der Reaktion wurde nicht umgesetztes Maleinsäureanhydrid über eine Entgasungszone aus der Polymerschmelze entfernt, das Produkt anschließend in einem Wasserbad gekühlt, danach granuliert und getrocknet. Der Gehalt an gepfropftem Maleinsäureanhydrid, die Pfropfausbeute (Gehalt an gepfropftem Maleinsäureanhydrid bezogen auf die Gesamtmenge des eingesetzten Maleinsäureanhydrids) und der Schmelzflußindex der Beispiele sowie der Vergleichsbeispiele können der nachfolgenden Tabelle entnommen werden. In der Tabelle ist ebenfalls die Zugfestigkeit eines glasfaserverstärkten Propylenhomopolymerisats, dem 4 Gew.-% des mit Maleinsäureanhydrid gepfropften Propylencopolymerisat zugesetzt ist, aufgenommen.

### Vergleichsbeispiel A

100 Gew.-Teile des in Beispiel 1 verwendeten Propylen-Ethylencopolymerisats wurden unter den Bedingungen von Beispiel 1, jedoch ohne Zusatz von Peroxid, mit 0,25 Gew.-Teilen Maleinsäureanhydrid gepfropft.

### Beispiel 2

Unter den Bedingungen von Beispiel 1 wurden 100 Gew.-Teile eines Propylen-Ethylencopolymerisats (A₂), bestehend aus 53,5 Gew.-% eines statistischen Ethylen-Propylencopolymerisats (bestimmt durch Extraktionsfraktionierung nach W. Holtrup, Makromol. Chem. 178, 2335 (1977)) mit 2,5 Gew.-% einpolymerisiertem Ethylen (bestimmt durch Fouriertransformationsspektroskopie) und 44,8 Gew.-% eines Propylen-Ethylencopolymerisats mit einem Ethylengehalt von 32 Gew.-% und einen Schmelzflußindex von 1,0 g/10 min (bei 230°C und 2,16 kg, nach DIN 53735) im Zweischneckenextruder ZSK 40 zusammen mit 0,03 Gew.-Teilen 2,5-Dimethyl-2,5-di-tert.-butyl(peroxyhexan) bei 180°C aufgeschmolzen, mit 0,35 Gew.-Teilen flüssigem Maleinsäureanhydrid versetzt und bei 260°C zur Reaktion gebracht.

### Vergleichsbeispiel B

100 Gew.-Teile des in Beispiel 1 verwendeten Propylen-Ethylencopolymerisats wurden unter den Bedingungen von Beispiel 1, jedoch ohne Zusatz von Peroxid, mit 0,35 Gew.-Teilen Maleinsäureanhydrid gepfropft.

**Tabelle**

| | Beispiele | | Vergleichsbeispiele | |
|---|---|---|---|---|
| | 1 | 2 | A | B |
| Gehalt an gepfropftem Maleinsäureanhydrid (Gew.-Teile pro 100 Gew.-Teile Propylencopolymerisat) | 0,23 | 0,30 | 0,19 | 0,25 |
| Pfropfausbeute (%) | 92 | 86 | 76 | 71 |
| Schmelzflußindex* (230°C/2,16 kg) | 3,8 | 2,2 | 4,5 | 2,4 |
| Zugfestigkeit** (MPa) | 74 | 76 | 68 | 70 |

| | | | | |
|---|---|---|---|---|
| * nach DIN 53 735 | | | | |
| ** nach DIN EN 61: Matrix: 96 Gew.-% Homopolypropylen, 4 Gew.-% mit Maleinsäureanhydrid gepfropftes Polypropylen Füllstoff:30 Gew.-% Glasfasern | | | | |

## Patentansprüche

1. Mit α,β-ethylenisch ungesättigten Carbonsäuren bzw. Carbonsäurederivaten gepfropfte Propylencopolymerisate, bestehend aus
einem Propylencopolymerisat aus einem statistisch verteilten Propylencopolymerisat (I) mit 0,1 bis weniger als 15 Gew.-% einpolymerisierter C₂- bis C₁₀-Alk-1-ene und einem statistisch verteilten Propylencopolymerisat (II) mit 15 bis 80 Gew.-% einpolymerisierter C₂- bis C₁₀-Alk-1-ene
erhältlich durch Umsetzung des zu pfropfenden Monomeren mit dem Propylencopolymerisat bei Drücken von 1 bis 300 bar, wobei man in Anwesenheit von 0,005 bis 0,5 Gew.-% eines radikalisch zerfallenden Initiators, 0,01 bis 1,0 Gew.-% des zu pfropfenden Monomeren, wobei sich beide Konzentrationsangaben jeweils auf das Propylencopolymerisat beziehen, dem aufgeschmolzenen Propylencopolymerisat hinzumischt und die Pfropfreaktion bei 200 bis 350°C durchführt.

2. Gepfropfte Propylencopolymerisate nach Anspruch 1, wobei man ein solches Propylencopolymerisat verwendet, welches aus
25 bis 97 Gew.-% des statistisch verteilten Propylencopolymerisats (I) und 3 bis 75 Gew.-% des statistisch verteilten Propylencopolymerisats (II) besteht.

3. Verfahren zur Herstellung von gepfropften Propylencopolymerisaten gemäß den Ansprüchen 1 und 2 durch Umsetzung des zu pfropfenden Monomeren mit dem Propylencopolymerisat bei Drücken von 1 bis 300 bar und Temperaturen von 200 bis 350°C, wobei man in Anwesenheit von 0,005 bis 0,5 Gew.-% eines radikalisch zerfallenden Initiators, 0,01 bis 1,0 Gew.-% des zu pfropfenden Monomeren, wobei sich beide Konzentrationsangaben jeweils auf das Propylencopolymerisat beziehen, dem aufgeschmolzenen Propylencopolymerisat hinzumischt, dadurch gekennzeichnet, daß man ein Propylencopolymerisat gemäß einem der Ansprüche 1 oder 2 verwendet.

4. Verfahren nach Anspruch 3, dadurch gekennzeichnet, daß die Pfropfreaktion bei Temperaturen von 210 bis 290°C durchgeführt wird.

5. Verfahren nach den Ansprüchen 3 oder 4, dadurch gekennzeichnet, daß das zu pfropfende Monomere in Konzentration von 0,01 bis 0,8 Gew.-%, bezogen auf das Propylencopolymerisat, verwendet wird.

6. Verfahren nach den Ansprüchen 3 bis 5, dadurch gekennzeichnet, daß der radikalisch zerfallende Initiator in Konzentrationen von 0,01 bis 0,2 Gew.-%, bezogen auf das Propylencopolymerisat, verwendet wird.

7. Verfahren zur Herstellung von vernetzten oder vernetzbaren Propylencopolymerisaten, wobei man die gepfropften Propylencopolymerisate gemäß den Ansprüchen 1 oder 2 mit organischen Vernetzungsmitteln umsetzt.

8. Verwendung der gepfropften Propylencopolymerisate gemäß den Ansprüchen 1 bis 3 als Haftvermittler oder in Folien, Fasern oder Formkörper.

## Claims

1. A propylene copolymer grafted with α,β-ethylenically unsaturated carboxylic acids or carboxylic acid derivatives and consisting of
a propylene copolymer comprising a random propylene copolymer (I) containing from 0.1 to less than 15% by weight of polymerized C₂-C₁₀-alk-1-enes and a random propylene copolymer (II) containing from 15 to 80% by weight of polymerized C₂-C₁₀-alk-1-enes
obtainable by reacting the monomer to be grafted with the propylene copolymer at from 1 to 300 bar, from 0.01 to 1.0% by weight of the monomer to be grafted, where both stated concentrations are based on the propylene copolymer, being added to the molten propylene copolymer in the presence of from 0.005 to 0.5% by weight of a free radical initiator and the grafting reaction being carried out at from 200 to 350°C.

2. A grafted propylene copolymer as claimed in claim 1, wherein the propylene copolymer used is one which consists of
from 25 to 97% by weight of the random propylene copolymer (I) and from 3 to 75% by weight of the random propylene copolymer (II).

3. A process for the preparation of a grafted propylene copolymer as claimed in claims 1 and 2 by reacting the monomer to be grafted with the propylene copolymer at from 1 to 300 bar and from 200 to 350°C, where from 0.01 to 1.0% by weight of the monomer to be grafted, where both stated concentrations are based on the propylene copolymer, is added to the molten propylene copolymer in the presence of from 0.005 to 0.5% by weight of a free radical initiator, wherein a propylene copolymer as claimed in either of claims 1 or 2 is used.

4. A process as claimed in claim 3, wherein the grafting reaction is carried out at from 210 to 290°C.

5. A process as claimed in claims 3 or 4, wherein the monomer to be grafted is used in a concentration of from 0.01 to 0.8% by weight based on the propylene copolymer.

6. A process as claimed in claims 3 to 5, wherein the free radical initiator is used in a concentration of from 0.01 to 0.2% by weight, based on the propylene copolymer.

7. A process for the preparation of a crosslinked or crosslinkable propylene copolymer, wherein a grafted propylene copolymer as claimed in claims 1 or 2 is reacted with an organic crosslinking agent.

8. Use of a grafted propylene copolymer as claimed in claims 1 to 3 as adhesion promoters or in films, fibers or moldings.

## Revendications

1. Copolymères de propylène greffés avec des acides carboxyliques ou dérivés d'acides carboxyliques α,β-éthyléniquement insaturés, constitués d'un copolymére de propylène à base d'un copolymère de propylène statistiquement distribué (I) comportant 0,1 à moins de 15% en poids d'alc-1-ènes en C₂-C₁₀ polymérisés et d'un copolymère de propylène statistiquement distribué (II) comportant 15 à 80% en poids d'alc-1-ènes en C₂-C₁₀ polymérisés,
que l'on peut obtenir par réaction du monomère à greffer avec le copolymère de propyléne à des pressions de 1 à 300 bars, dans laquelle on mélange 0,01 à 1,0% en poids du monomére à greffer dans le copolymère de propylène fondu en présence de 0,005 à 0,5% en poids d'un initiateur de décomposition radicalaire, les deux indications de concentration se rapportant chacune au copolymère de propylène, et on effectue la réaction de greffage à 200 jusqu'à 350°C.

2. Copolymères de propylène greffés suivant la revendication 1, dans lesquels on utilise un copolymère de propylène qui est constitué de 25 à 97% en poids du copolymère de propylène statistiquement distribué (I) et de 3 à 75% en poids du copolymère de propyléne statistiquement distribué (II).

3. Procédé de préparation de copolymères de propylène greffés suivant l'une des revendications 1 et 2, par réaction du monomère à greffer avec le copolymère de propylène à des pressions de 1 à 300 bars et des températures de 200 à 350°C, procédé dans lequel on ajoute 0,01 à 1,0% en poids du monomère à greffer au copolymère de propylène fondu en présence de 0,005 à 0,5% en poids d'un initiateur de décomposition radicalaire, les deux indications de concentration se rapportant chacune au copolymère de propylène, caractérisé en ce qu'on utilise un copolymère de propylène suivant l'une des revendications 1 et 2.

4. Procédé suivant la revendication 3, caractérisé en ce que la réaction de greffage est effectuée à des températures de 210 à 290°C.

5. Procédé suivant l'une des revendications 3 et 4, caractérisé en ce que le monomère à greffer est utilisé en une concentration de 0,01 à 0,8% en poids, par rapport au copolymère de propyléne.

6. Procédé suivant l'une des revendications 3 à 5, caractérisé en ce que l'initiateur de décomposition radicalaire est utilisé en une concentration de 0,01 à 0,2% en poids, par rapport au copolymère de propylène.

7. Procédé de préparation de copolymères de propylène réticulés ou réticulables, dans lequel on fait réagir les copolymères de propylène greffés, suivant l'une des revendications 1 et 2, avec des agents de réticulation organiques.

8. Utilisation des copolymères de propylène greffés suivant l'une des revendications 1 à 3, comme agents adhérisants ou dans des feuilles, fibres ou corps façonnés.
